# EUROPEAN PATENT APPLICATION

(11) **EP 4 607 430 A1**
(43) Date of publication of application: **27.08.2025**
(21) Application number: 22962724.5
(22) Date of filing: 19.10.2022
(51) Int. Cl.: G06Q 30/012

(54) **WARRANTY INFORMATION NOTIFICATION SYSTEM AND COMPUTER-READABLE STORAGE MEDIUM**

(71) Applicant: FANUC CORPORATION, Oshino-mura Minamitsuru-gun Yamanashi 401-0597 (JP)
(72) Inventor: NISHIMURA, Yusaku, Minamitsuru-gun, Yamanashi 401-0597 (JP); KOBAYASHI, Toru, Minamitsuru-gun, Yamanashi 401-0597 (JP)
(74) Representative: Haseltine Lake Kempner LLP
(86) International application number: PCT/JP2022/038869
(87) International publication number: WO 2024/084612

(57) **Abstract**

Provided is a warranty information notification system comprising a warranty information management unit which
accepts registration of warranty information from a device purchaser, and a notification destination management unit which, upon
acceptance of the registration of the warranty information, acquires configuration information relating to a component forming
a device, accepts registration of a supplier of the component forming the device as a notification destination of the warranty
information, and notifies the notification destination of information which is included in the warranty information and is required
for starting the warranty.

## Description

### [Technical Field]

The present disclosure relates to a warranty information notification system and a computer readable storage medium.

### [Background Art]

In manufacturing of industrial products, it is less common to manufacture all components in a single facility, and it is common to embed components procured from a plurality of manufacturers and then manufacture products. Information on a plurality of components of products is managed with electronic association. For example, see Patent Literature 1.

### [Citation List]

### [Patent Literature]

Patent Literature 1: International Publication No. 2022/054767

### [Summary of Invention]

### [Technical Problem]

When products are manufactured, components are first procured, the components are assembled, and the assembled products are then delivered to customers. Contracts with customers include contracts of warranty. Such contracts of warranty define a target product, a warranty period, a beginning date of a warranty period, a warranty coverage, applicable use, or the like.

In the field of maintenance of devices, it is desired to manage warranty information.

### [Solution to Problem]

A warranty information notification system that is one aspect of the present disclosure includes: a warranty information management unit configured to accept registration of warranty information from a device purchaser; and a notification recipient management unit configured to, in response to accepting the registration of the warranty information, acquire configuration information on a component of a device, accept registration of a supplier of the component of the device as a notification recipient of the warranty information, and notify the notification recipient of information required for start of warranty included in the warranty information.

### [Brief Description of Drawings]

[Fig. 1]

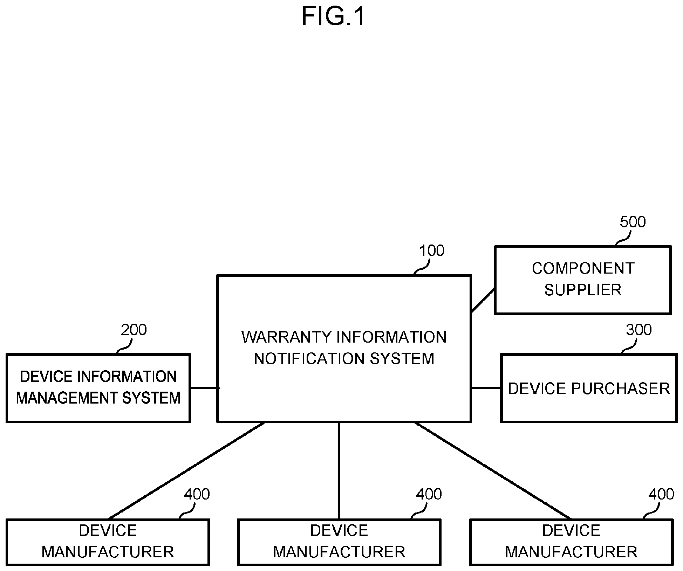

   Fig. 1 is a system configuration diagram of a warranty information notification system.
[Fig. 2]

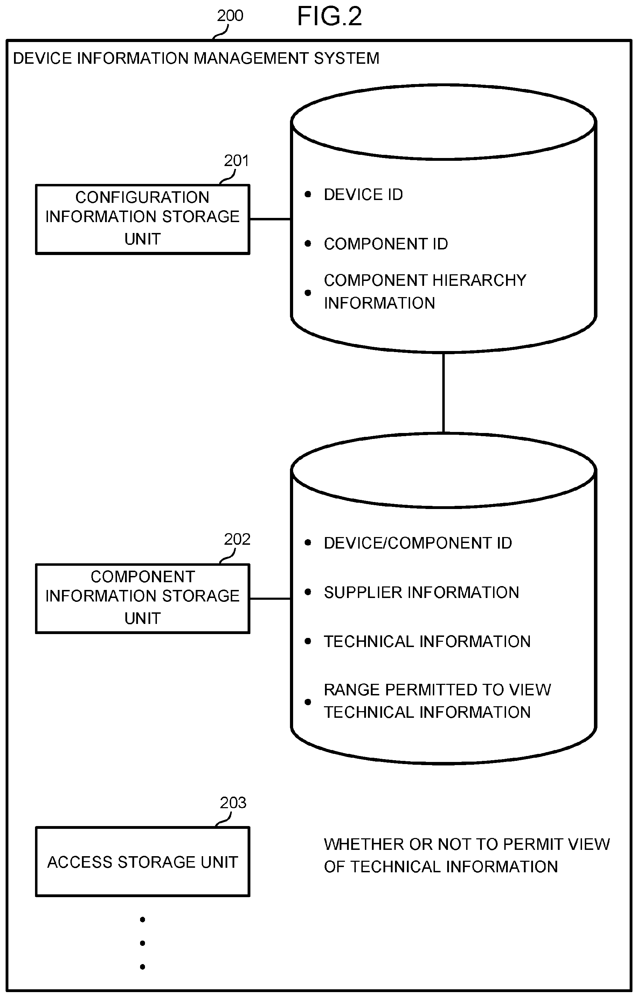

   Fig. 2 is a block diagram of a device information management system.
[Fig. 3]

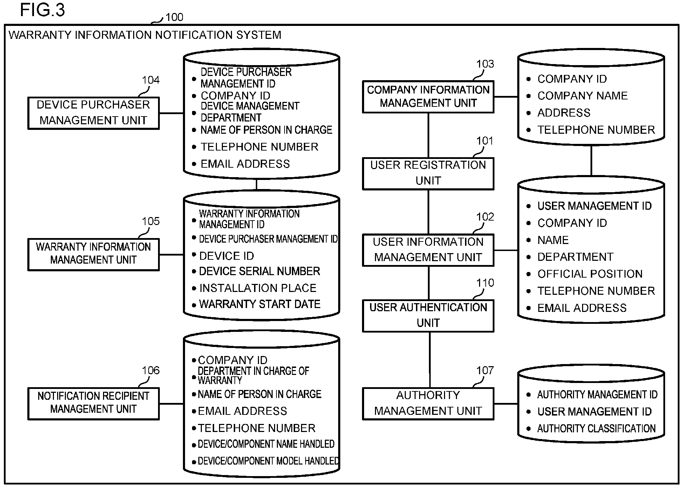

   Fig. 3 is a block diagram of the warranty information notification system.
[Fig. 4]

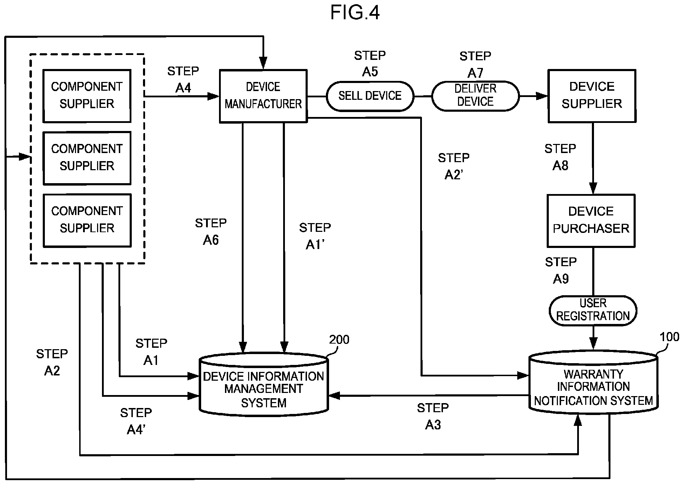

   Fig. 4 is a block diagram illustrating a registration process performed on configuration information, component information, and a notification recipient.
[Fig. 5]

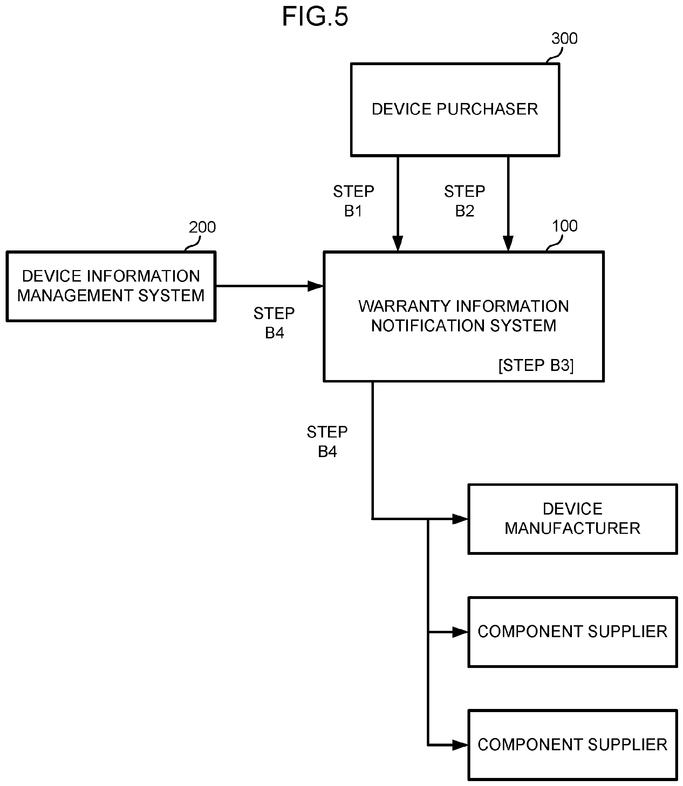

   Fig. 5 is a block diagram illustrating a notification process performed on warranty information.
[Fig. 6]

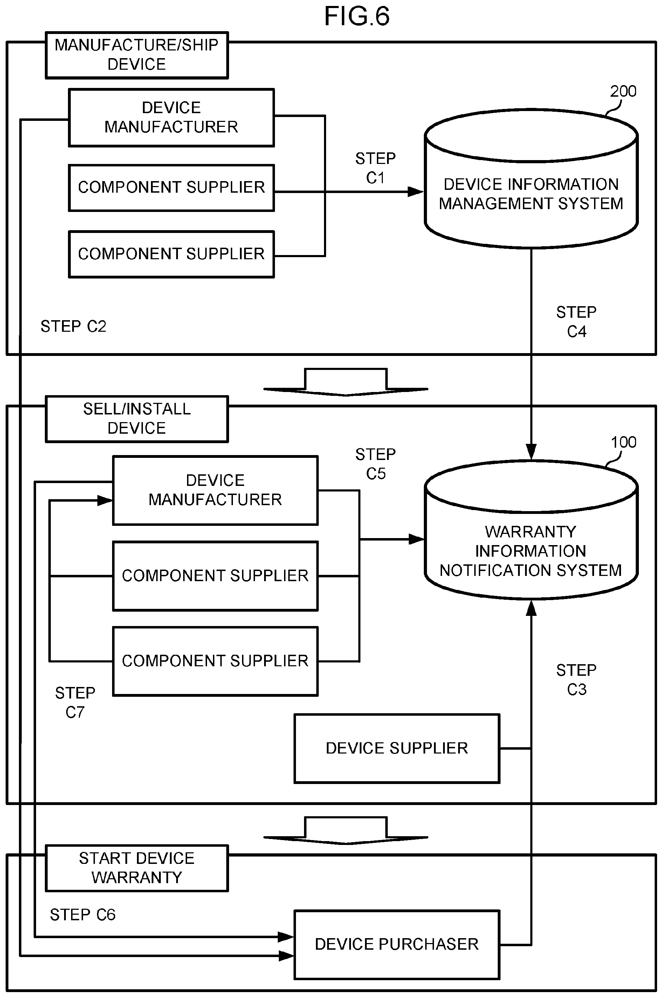

   Fig. 6 is a block diagram illustrating an update process performed on warranty information.
[Fig. 7]

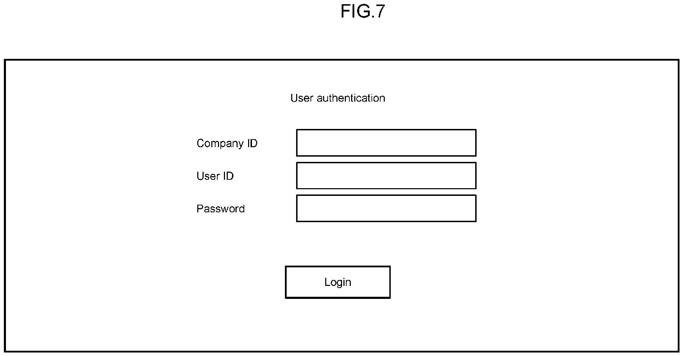

   Fig. 7 is an exemplary window configuration diagram of a user authentication window.
[Fig. 8]

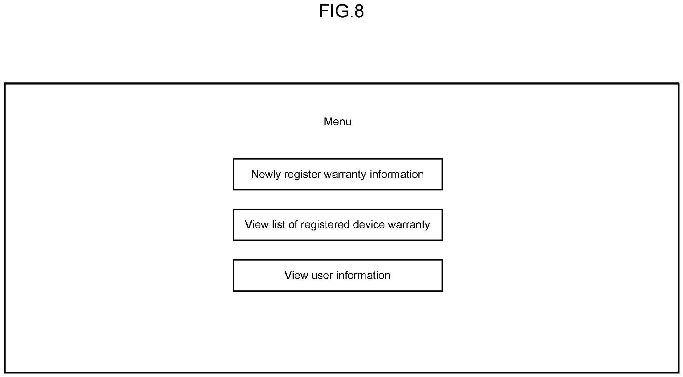

   Fig. 8 is an exemplary window configuration diagram of a menu window.
[Fig. 9]

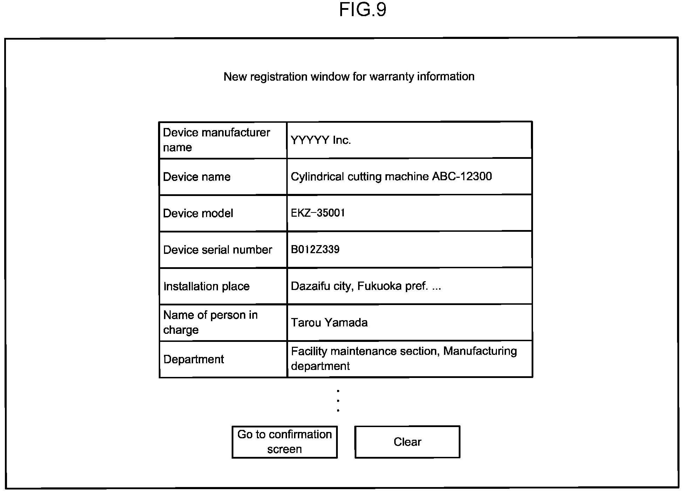

   Fig. 9 is an exemplary window configuration diagram of a window for new registration of warranty information.
[Fig. 10]

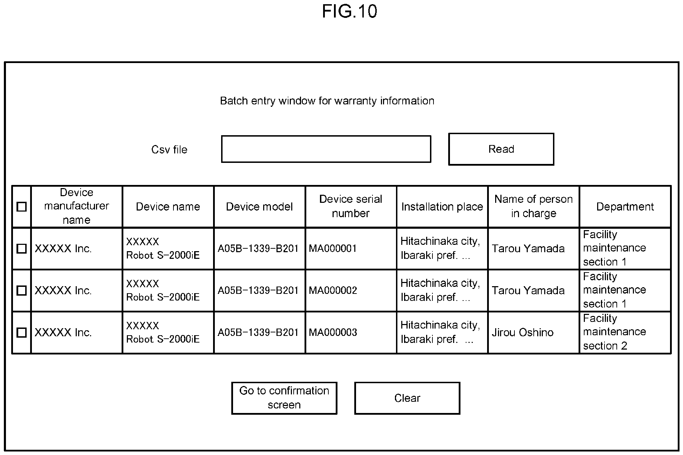

   Fig. 10 is an exemplary window configuration diagram of a window for batch entry of warranty information.
[Fig. 11]

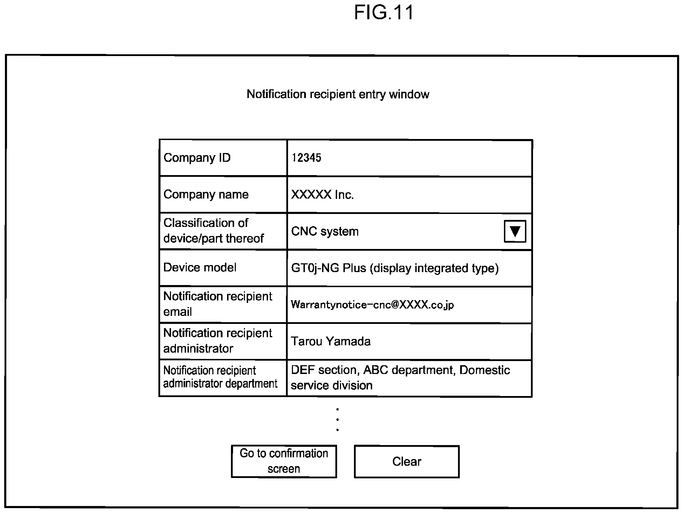

   Fig. 11 is an exemplary window configuration diagram of a window for notification recipient entry.
[Fig. 12]

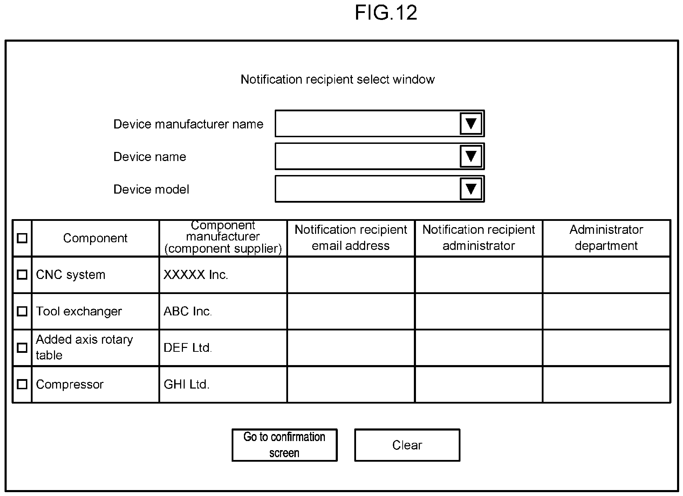

   Fig. 12 is an exemplary window configuration diagram of a window for notification recipient selection.
[Fig. 13]

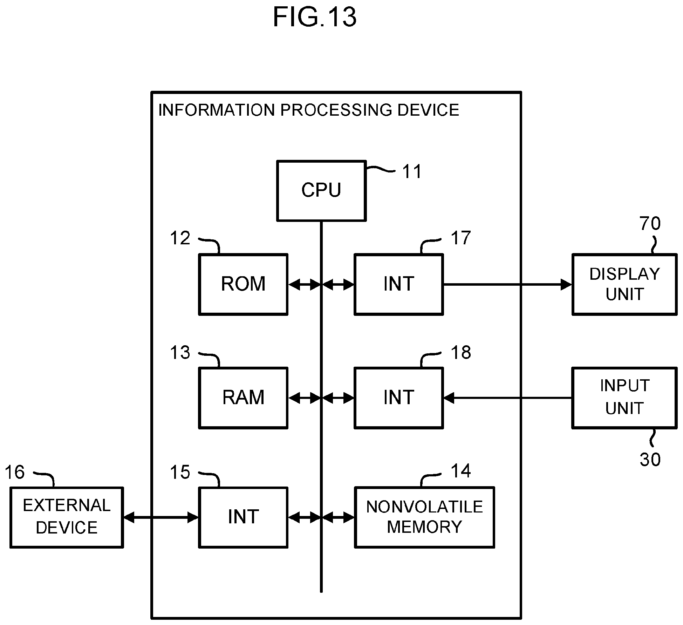

   Fig. 13 is a hardware configuration diagram of an information processing device included in the warranty information notification system.

### [Description of Embodiments]

A warranty information notification system 100 will be described below.

The warranty information notification system 100 notifies a device manufacturer and a component supplier of information on warranty applied to devices. As definitions of terms, a device in the present embodiment includes not only a single device but also a plurality of devices. Further, a device also includes a combination of different devices such as a plant system formed of a combination of a plurality of robots and one or more conveyers configured to transport workpieces. That is, a device also includes a system in which one or more components, which are component elements, and one or more devices are combined.

As illustrated in Fig. 1, the warranty information notification system 100 can be connected to a device information management system 200, a terminal 300 of a device purchaser, terminals 400 of device manufacturers, and a terminal 500 of a component supplier. Note that the component supplier as used herein may be a component manufacturer that manufactures components, a supplier that manufactures/sells components, a seller that sells components, or the like. Further, the component supplier also includes a system integrator. The component supplier is responsible for operations of managing warranty information on devices and components.

The warranty information notification system 100 is implemented in an information processing device such as a personal computer (PC), a server, or the like. Note that the component elements of the warranty information notification system 100 are classified by the function thereof and are not required to be distinctly divided in terms of the physical configuration and the program configuration.

Fig. 2 is a block diagram of the device information management system 200.

The device manufacturer registers configuration information about components of devices to a configuration information storage unit 201. The configuration information may be a device ID, a component ID, hierarchy information on components, or the like. The serial number of components is one of the component IDs. The hierarchy information on components refers to a hierarchy of components embedded in a device. The hierarchy structure has such structure that includes a device that is a product at the top, primary components of the device, and secondary components of the primary components.

For example, a machine tool is formed of the primary components such as a numerical control device, a tool exchanger, a ball screw, or the like. Some components can be added as an option. For example, an additional axis rotary table or the like may be the component that can be added as an option.

A component supplier registers component information to a component information storage unit 202 of the device information management system 200. Herein, a device is also considered as one of the components, and device information is registered as component information.

The component information storage unit 202 stores component information such as a component ID (device ID), supplier information, technical information, a range permitted to view technical information, or the like. The range permitted to view technical information is determined based on the hierarchy information or inter-company agreement. The component information includes a name of a component supplier, a name of a component manufacturer, an address of a component supplier, a department in charge related to warranty, an official position of a person in charge related to warranty, a name of a person in charge related to warranty, or the like.

An access storage unit 203 stores access information, references the range permitted to view technical information, and determines whether or not to permit view of technical information of a component supplier.

Next, the warranty information notification system 100 will be described. Fig. 3 is a block diagram of the warranty information notification system 100.

The warranty information notification system 100 includes a user registration unit 101. The user registration unit 101 accepts registration of user information. The user information may be a user management ID, a company ID, a name, a department, an official position, a telephone number, an email address, or the like.

A user information management unit 102 manages user information.

A company information management unit 103 manages information on a company to which the user belongs. The company information may be a company ID, a company name, an address, a telephone number, or the like. The company ID and user management IDs are in one-to-multiple relationship. A plurality of users can be registered for a single company.

The warranty information notification system 100 includes a user authentication unit 110. The user authentication unit 110 references the user information management unit 102 and the company information management unit 103 to authenticate a device purchaser. The information on a device purchaser is registered in a device purchaser management unit 104. The information on a device purchaser may be a device purchaser management ID, a company ID, a device management department, a name of a person in charge, a telephone number, an email address, or the like.

The warranty information notification system 100 includes a warranty information management unit 105. The warranty information management unit 105 manages warranty information registered by device purchasers. The warranty information may be a warranty information management ID, a device purchaser management ID, a device ID, a device serial number, an installation places, a warranty start date, or the like. The warranty start date is calculated from the warranty information. Information related to calculation of the warranty start date may be a device installation date, a date of receiving inspection, or the like. Each device is managed by information that can uniquely identify the device (herein, referred to as a device ID), such as the serial number. The device ID is written on the nameplate of the device or the like. On the nameplate, the name, the model, or the like of the device are written. The user registers information about warranty, if necessary. Note that the information may be read from a two-dimensional barcode or the like attached to the device instead of a nameplate.

The warranty information management unit 105 calculates a warranty start date or a warranty period from a device ID, an installation data of a device, a date of receiving inspection, or an installation place. A warranty period, a beginning date of warranty, extended warranty, a retention period of components for repairment, a warranty period for early failure, a warranty coverage, or the like may differ in accordance with a type of the device and an installation place of the device. The beginning date of the warranty period may be a date of start of device operation, a date of installation of the device in the plant, a date of receiving inspection of the device, or the like. The warranty period or the warranty content differs, in particular, between a case where the device is used in Japan or a case where the device is used in foreign countries. Furthermore, the warranty may be paid warranty or free warranty. The warranty condition is defined in advance in a contract.

The warranty information notification system 100 includes a notification recipient management unit 106. Once a device purchaser registers warranty information, the notification recipient management unit 106 acquires device configuration information and component information required for setting a notification recipient from the device information management system 200. The notification recipient of warranty information is mainly a component supplier. The notification recipient information may be a company ID, a department in charge of warranty, a name of a person in charge, an email address, a telephone number, a device/component name handled, a device/component model handled, or the like.

An authority management unit 107 manages access authority of the user. The authority information may be an authority management ID, a user management ID, an authority classification, or the like. The authority management unit 107 manages authority for each company (device manufacturer, component supplier) and each user (company personnel). The authority given to a user and the authority given to a company differ.

The authority given to a company is related to hierarchy information on a component configuration. In response to registration of warranty information, the authority management unit 107 reads hierarchy information from the device information management system 200. Each device purchaser, each device manufacturer, and each component supplier can access data in defined hierarchies. The association between a company and a hierarchy is determined in advance between the parties of the device purchaser and the component supplier.

The authority given to a user is related to a user's operation range. Authority given to a user belonging to a device purchaser may be authority to register warranty information, authority to view warranty information, or the like. Authority given to a user belonging to a component supplier may be authority to register a notification recipient and authority to edit/add/update information about warranty of its own product. Note that a device purchaser is not necessarily a company that has purchased a device. The authority to register warranty information may be given to a seller of the device or an installer of the device.

The notification recipient management unit 106 notifies warranty information to a notification recipient of a component supplier. A notification method is not particularly limited. The notification method may be via an email, a telephone, a document, an application, or the like. A person in charge in the component supplier is able to confirm the warranty start date of a device in which the component supplier's own component is embedded and the warranty content of the device.

Each component supplier can edit a notification recipient to be managed by the notification recipient management unit 106. The authority to edit the notification recipient is managed by the authority management unit 107.

The operation of the warranty information notification system 100 of the present embodiment will be described.

The warranty information notification system 100 accepts configuration information on components and registration of a notification recipient of warranty information at the time of manufacturing/shipping or the like of a device. Fig. 4 illustrates a registration process performed by the configuration information storage unit 201, the component information storage unit 202, and the user registration unit 101.

[Step A1] The device information management system 200 accepts component information from a component supplier and registers the component information to the component information storage unit 202. [Step A1'] The device information management system 200 accepts device information from a device manufacturer and registers the device information to the configuration information storage unit 201. In [Step A1'], the device is considered as a component, and the device information is registered to the component information storage unit 202 as component information.

[Step A2] The warranty information notification system 100 accepts entry of a notification recipient of warranty information from the component supplier and registers the notification recipient of warranty information to the notification recipient management unit 106. The timing to suggest registration of a notification recipient may be the time of completion of design of the component, the time of shipment of the device, or the like but is not particularly limited. Note that a plurality of notification recipients of warranty information may be registered. [Step A2'] The warranty information notification system 100 also accepts entry of a notification recipient from the device manufacturer and registers the notification recipient of the device manufacturer to the notification recipient management unit 106 as the notification recipient of the warranty information.

In [Step A3] and [Step A2'], the warranty information notification system 100 acquires configuration information on components registered in the device information management system 200. The configuration information on components includes hierarchy information. The hierarchy information is used as information for determining a component supplier as a notification recipient of warranty information. The relationship between setting of a notification recipient and hierarchy information can be defined by a device manufacturer based on inter-company agreement.

[Step A4] The component supplier delivers the components and the component information to the device manufacturer. [Step A4'] The component supplier registers the component information to the component information storage unit 202 of the device information management system 200. The device manufacturer assembles the components to manufacture the device.

[Step A5] The device manufacturer sells the device. The device may be sold directly by the device manufacturer or may be sold via a distributor or a system integrator. In the following, an entity that sells/delivers/installs a device will be referred to as a device supplier.

[Step A6] The device manufacturer registers device information (a type of component information) to the component information storage unit 202 of the device information management system 200 when shipping the device.

[Step A7] The device is delivered to the device supplier such as a distributor or a system integrator.

[Step A8] The device supplier such as the device manufacturer, the distributor, or the system integrator sells/delivers the device and installs the device.

[Step A9] The device purchaser (or the device supplier) performs user registration of the warranty information notification system 100. The user registration information is managed by the user registration unit 101.

As a result of the process from [Step A1] to [Step A9], the registration of the component data, the registration of the notification recipient of the warranty information, and the registration of the device purchaser are completed.

Next, the notification process of warranty information will be described with reference to Fig. 5. The notification process of warranty information is performed assuming that the above registration process has been completed.

[Step B1] Once the device is delivered/installed, the device purchaser (or the device supplier) accesses the warranty information notification system 100. The warranty information notification system 100 performs authentication of the device purchaser (or the device supplier).

[Step B2] If the result of the authentication indicates that the device purchaser (or the device supplier) has authority to register warranty information, the warranty information notification system 100 accepts registration of the warranty information. The warranty information includes information about the start of warranty, such as a device installation place or a device installation date.

[Step B3] The warranty information notification system 100 manages the warranty information and the device information in association with each other.

[Step B4] In response to accepting the registration of the warranty information from the device purchaser, the warranty information notification system 100 acquires the registered configuration information on the device from the device information management system 200. The notification recipient management unit 106 accepts selection of a notification recipient of the warranty information out of component suppliers that supply the component of the device based on the configuration information. The warranty information notification system 100 notifies the warranty information to the notification recipient set by the notification recipient management unit 106.

The warranty information notification system 100 functions as an intermediate agent for information between a device purchaser and a component supplier in order to manage user information on a device purchaser, configuration information on a device, and information on a component supplier that supplies components of the device.

The warranty information notification system 100 mediates between a component supplier (including a device manufacturer) and a device purchaser, accepts update performed by a component supplier on information about warranty of its own product, and provides the updated information to the device purchaser. Fig. 6 illustrates the update process performed by the component supplier (including the device manufacturer) on information about warranty of its own product.

[Step C1] The device information management system 200 accepts registration of a component configuration of a device, component information, hierarchy information between the components and the device, access authority for component information, or the like from the device manufacturer and the component supplier.

(Since Step C1 corresponds to the registration operation from Step A1 to Step A9, the description thereof will be omitted.)

[Step C2] The device purchaser purchases the device.

[Step C3] The device purchaser (or the device supplier) accesses the warranty information notification system 100. The warranty information notification system 100 performs authentication of the device purchaser (or the device supplier).

[Step C4] The warranty information notification system 100 manages information about warranty of their own products of the component supplier and the device manufacturers in association with information that identifies the device, such as a device ID.

[Step C5] The component supplier and the device manufacturer associated with the device share the information about the warranty of their own products with the device purchaser. The component supplier and the device manufacturer have authority to edit/add/update the information about the warranty of their own products.

[Step C6] The device manufacturer reads a notification recipient of the component supplier and notifies the component supplier of the information edited/added/updated in step C5. The device purchaser has authority to view the information about the warranty of its own product provided by the component supplier.

[Step C7] The component supplier notifies the device manufacturer of information about the components. The device manufacturer notifies the device purchaser of the information about the components, if necessary.

Next, an example of user authentication and notification recipient registration in the warranty information notification system 100 will be described.

In response to access to the warranty information notification system 100, a user authentication window as illustrated in Fig. 7 is displayed. In the user authentication window, entry regions for company identification information (company ID), user identification information (user ID), and a password, and the like are displayed. Further, a button to select execution of login is displayed under the entry regions.

In response to entry of a company ID and a user ID, a menu window as illustrated in Fig. 8 is displayed. In the menu window, operations allowed for the user to perform are displayed. The device purchaser is allowed to perform menus of "Newly register warranty information", "View list of registered warranty", "View user information", and the like. The menu window differs between that for a device manufacturer and that for a component supplier. The user's operation range varies in accordance with the authority given to the user.

Once the device purchaser (or the device supplier) selects the menu "Newly register warranty information", "New registration window for warranty information" as illustrated in Fig. 9 is displayed. In "New registration window for warranty information", a device manufacturer name, a device name, a device model, a device serial number, an installation place, a name of a person in charge, a department, and the like are registered. Note that, the information on a device manufacturer name, a device name, a device model, or the like may be read from the device information management system 200.

It is also possible to enter warranty information on a plurality of devices in batches. Fig. 10 is "Batch entry window for device warranty information". When a plurality of devices are installed, batch entry is convenient. In "Batch entry window for warranty information", a device manufacturer name, a device name, a device model, a device serial number, an installation place, a name of a person in charge, a department, and the like can be registered at once. The warranty information may be read from a Comma separated value (Csv) file or the like.

Fig. 11 is "Notification recipient entry window". Some of the users of the component supplier or the device manufacturer have authority to access this window. The component supplier or the device manufacturer registers its own contact address. The access authority is set, if necessary.

In "Notification recipient entry window", information on a company ID, a company name, a classification of a device/part thereof, a device model, a notification recipient email, a notification recipient administrator, a department of the notification recipient administrator, and the like can be registered. Even for the same company, the notification recipient of warranty registration may differ in accordance with the type of device/part thereof. The notification recipient can be set for each type of device/component thereof. Note that the component thereof means one or more components of a device.

Further, there is a request to set a plurality of notification recipient emails for a single device/component thereof. In such a case, a plurality of notification recipients can be registered by using a batch registration window.

Fig. 12 is "Notification recipient select window". This window has entry regions for a device manufacturer, a device name, and a device model. A device can be identified from these pieces of information. Under the identification information on the device, a list of components embedded in the device is displayed. In this list, names of the components, component manufacturers (or component suppliers), notification recipient email addresses, notification recipient administrators, departments of administrators, and the like are displayed. Each row in the list is provided with a checkbox. One or more component suppliers to be notified of the warranty information can be selected by using the checkbox.

The warranty information notification system 100 of the present embodiment acquires configuration information on components created when the device is designed. In response to acquiring the warranty information from the device purchaser (or the device supplier), the warranty information notification system 100 notifies this information to the component supplier that supplies the component of the device.

The warranty information notification system 100 also accepts selection of a notification recipient of warranty information. In the selection of a notification recipient, candidates for the notification recipient are presented based on the configuration information on the component.

Component suppliers are unable to track distribution of their own components after delivering these components. **In** the warranty information notification system 100 of the present embodiment, information about components created in the design phase and the contact address of the component supplier are associated with each other, and information about start of warranty is notified to the component supplier. The component supplier can utilize the information about the start of warranty for inventory management of components or the like.

Further, the warranty information notification system 100 may notify the component supplier of information about warranty such as identification information on the device in which the components are embedded, the installation place of the device, the warranty period of the components, or the like. The notified information can be utilized for inventory management of the components. Further, the information can be provided to the device purchaser via the warranty information notification system 100 even after sale of the components.

Further, the component supplier can estimate the inventory quantity of the components to be stored in warehouses in each country or each region based on the information such as information about components, a warranty period of the device, the installation place of the device, or the like. Optimization of inventory reduces the number of days required for repairment of a device and reduces inventory storage costs.

For each component, replacement of consumables, stockpiling of spare components, regular inspection, the end of a warranty period, or the like are scheduled. The component supplier can provide such information to the purchaser, if necessary.

Note that the warranty information notification system 100 can also be applied to assembly lines with robots. In the case of robots, a hand, an air, a flow, a control device, or the like may be combined as components. The robots are arranged in an assembly line. A system integrator recognizes the configuration of the assembly line and the robots. A manager of a plant (which may be a seller of a robot device or a person who installs a robot device) registers information about warranty to the warranty information notification system 100. The information about warranty also includes information required for calculation of a warranty period. The information required for calculation of a warranty period may include a date of start of robot operation, a date of delivery of the robot, a date of receiving inspection of the robot, or the like. The information about warranty is determined in advance in accordance with a contract.

The hardware configuration of the information processing device included in the warranty information notification system 100 to which the present embodiment is applied will be described below. Fig. 13 is a hardware configuration diagram of the information processing device. As illustrated in Fig. 13, the information processing device includes a CPU 11 configured to control the information processing device as a whole, a ROM 12 configured to store a program or data, and a RAM 13 used for temporarily loading data therein, and the CPU 11 reads a system program stored in the ROM 12 via a bus and controls the entire information processing device in accordance with the system program.

A nonvolatile memory 14 may be backed up by a battery (not illustrated), for example, and the storage state thereof is held even when the information processing device is powered off. The nonvolatile memory 14 stores a program loaded from an external device 16 via interfaces 15, 17, 18 or various data such as data on user operation input via an input unit 30. Further, various data are displayed on a display unit 70.

The interface 15 is an interface for connecting the information processing device to the external device 16 such as an adaptor. Programs, various parameters, and the like are loaded from the external device 16 side.

Although the present disclosure has been described in detail, the present disclosure is not limited to the individual embodiments described above. In these embodiments, various addition, replacement, change, partial deletion, and the like are possible within the scope not departing from the spirit of the present disclosure or within the scope not departing from the spirit of the present disclosure derived from the contents recited in the claims and their equivalents. Further, these embodiments can also be implemented in combination. For example, the order of respective operations and the order of respective processes have been illustrated as an example in the embodiments described above, and the disclosure is not limited thereto.

With respect to the above embodiments and modified examples, the following supplemental notes are further disclosed.

### <Supplementary note 1>

A warranty information notification system (100) comprises: a warranty information management unit (105) configured to accept registration of warranty information from a device purchaser; and a notification recipient management unit (106) configured to, in response to accepting the registration of the warranty information, acquire configuration information on a component of a device, accept registration of a supplier of the component of the device as a notification recipient of the warranty information, and notify the notification recipient of information required for start of warranty included in the warranty information.

### <Supplementary note 2>

In response to accepting the registration of the warranty information on the device, the warranty information management unit (105) calculates a warranty start date based on the warranty information.

### <Supplementary note 3>

The notification recipient management unit (106) accepts selection of one supplier of the component out of suppliers of the component of the device, the one supplier being the notification recipient.

### <Supplementary note 4>

In the warranty information notification system (100), the configuration information includes hierarchy information on components, and the notification recipient management unit (106) presents the hierarchy information on components as a reference for selection of the notification recipient.

### <Supplementary note 5>

The warranty information notification system (100) accepts update, the update being performed by the supplier on information about warranty of the supplier's own product, and the supplier being set as the notification recipient of the warranty information.

### <Supplementary note 6>

The warranty information notification system (100) comprises: an authority management unit (107) configured to manage authority of the supplier of the component and the device purchaser; and a user authentication unit (110) configured to perform authentication of the supplier of the component and authentication of the device purchaser, and in accordance with a result of the authentication, the notification recipient management unit (106) accepts registration of a notification recipient performed by the supplier of the component and registration of warranty information performed by the device purchaser.

### <Supplementary note 7>

A storage medium (12, 13, 14) storing a processor (11) readable instruction is provided, and the instruction is configured to, when executed by one or a plurality of processors, cause the one or the plurality of processors to: accept registration of warranty information from a device purchaser, in response to accepting the registration of the warranty information; acquire configuration information on a component of a device and manage a supplier of the component of the device as a notification recipient of the warranty information; and notify the notification recipient of information required for start of warranty included in the warranty information.

### [List of Reference Symbols]

- 100: warranty information notification system
- 104: device purchaser management unit
- 105: warranty information management unit
- 106: notification recipient management unit
- 107: authority management unit
- 110: user authentication unit
- 11: CPU
- 12: ROM
- 13: RAM
- 14: nonvolatile memory

## Claims

1. A warranty information notification system comprising:
a warranty information management unit configured to accept registration of warranty information from a device purchaser; and
a notification recipient management unit configured to, in response to accepting the registration of the warranty information, acquire configuration information on a component of a device, accept registration of a supplier of the component of the device as a notification recipient of the warranty information, and notify the notification recipient of information required for start of warranty included in the warranty information.

2. The warranty information notification system according to claim 1, wherein in response to accepting the registration of the warranty information on the device, the warranty information management unit calculates a warranty start date based on the warranty information.

3. The warranty information notification system according to claim 1, wherein the notification recipient management unit accepts selection of one supplier of the component out of suppliers of the component of the device, the one supplier being the notification recipient.

4. The warranty information notification system according to claim 3,
wherein the configuration information includes hierarchy information on components, and
wherein the notification recipient management unit presents the hierarchy information on components as a reference for selection of the notification recipient.

5. The warranty information notification system according to claim 1, wherein the warranty information notification system accepts update, the update being performed by the supplier on information about warranty of the supplier's own product, and the supplier being set as the notification recipient of the warranty information and being performed.

6. The warranty information notification system according to claim 1 further comprising:
an authority management unit configured to manage authority of the supplier of the component and the device purchaser; and
a user authentication unit configured to perform authentication of the supplier of the component and the device purchaser,
wherein in accordance with a result of the authentication, the notification recipient management unit accepts registration of a notification recipient performed by the supplier of the component and registration of warranty information performed by the device purchaser.

7. A storage medium storing a processor readable instruction, the instruction being configured to, when executed by one or a plurality of processors, cause the one or the plurality of processors to:
accept registration of warranty information from a device purchaser;
in response to accepting the registration of the warranty information, acquire configuration information on a component of a device and manage a supplier of the component of the device as a notification recipient of the warranty information; and
notify the notification recipient of information required for start of warranty included in the warranty information.
